# EUROPÄISCHE PATENTANMELDUNG

(11) **EP 2 166 281 A2**
(43) Veröffentlichungstag der Anmeldung: **24.03.2010**
(21) Anmeldenummer: 09170401.5
(22) Anmeldetag: 16.09.2009
(51) Int. Cl.: F21V 17/16, F21V 25/02, F16L 55/136

(54) **Verschlusselement für rohrartige Körper**

(30) Priorität: 19.09.2008 DE 102008047928
(71) Anmelder: Zumtobel Lighting GmbH, 6850 Dornbirn (AT)
(72) Erfinder: Gadner, Wolfgang, 6912, Hörbranz (AT)
(74) Vertreter: Thun, Clemens

(57) **Zusammenfassung**

Verschlusselement (2) für die Stirnseite eines rohrartigen Körpers (3), insbesondere einer Schutzrohrleuchte (1), dass eine zum Verschließen des rohrartigen Körpers (3) vorgesehene Endkappe (4), ein Klemmelement, welches dazu vorgesehen ist, mit der Innenwand des rohrartigen Körpers (3) verklemmt zu werden und hierdurch die Endkappe (4) an dem rohrartigen Körper (3) zu fixieren und ein Betätigungselement (6) zum Verklemmen des Klemmelements mit dem rohrartigen Körper (3) aufweist, wobei das Betätigungselement (6) von der dem Klemmelement gegenüberliegenden Seite der Endkappe (4) her betätigbar ist. Des Weiteren ist das Klemmelement durch eine Klemmscheibe (5) gebildet, welche zumindest ein flügelartiges Klemmteil (7) aufweist, das zum Verklemmen mit dem rohrartigen Körper (3) vorgesehen ist.

## Beschreibung

Die vorliegende Erfindung betrifft ein Verschlusselement für die Stirnseite eines rohrartigen Körpers, insbesondere einer Schutzrohrleuchte, sowie eine Schutzrohrleuchte mit einem zumindest teilweise transparenten rohrartigen Gehäuse und entsprechendem Verschlusselement. Das Verschlusselement ist hierbei derart ausgebildet, dass es sich durch Verklemmen an dem rohrartigen Körper fixieren lässt.

Schutzrohrleuchten bestehen in der Regel aus einer transparenten Röhre, in der die einzelnen Elemente der Leuchte angeordnet sind. Da derartige Schutzrohrleuchten aufgrund ihrer Einsatzgebiete häufig gegen Gase und auch Flüssigkeiten abgedichtet sein müssen, ist vorgesehen, dass die transparente Röhre an ihren Stirnseiten verschlossen wird. Hierfür sind aus dem Stand der Technik bereits verschiedenste Stirnteile bekannt, die an die Stirnseiten angesetzt und mit dem Rohr gekoppelt werden.

Die deutsche Offenlegungsschrift DE 37 23 867 A1 beschreibt beispielsweise eine Schutzrohrleuchte, bei der ein Schutzrohr an seinen beiden Enden durch abdichtende Endkappen verschlossen ist. Die Endkappen bestehen hier jeweils aus zwei Scheiben, deren Außendurchmesser dem Innendurchmesser des Schutzrohres entspricht. Die außen liegende Scheibe weist zusätzlich noch einen Ringbund auf, an dem das Schutzrohr mit seiner jeweiligen Stirnseite anliegt. Des Weiteren weisen die inneren Scheiben jeweils noch eine stirnseitig offene Ringnut auf, wobei die Tiefe der Ringnut kleiner ist als der Querschnitt eines eingelegten O-Rings. Durch eine Schraube werden dann die jeweiligen beiden Scheiben miteinander verbunden, wodurch die O-Ringe nach außen an die Innenwand des Schutzrohrs gedrückt werden. Die Endkappen werden dementsprechend lediglich durch den Anpressdruck der O-Ringe in dem Schutzrohr fixiert.

Der vorliegenden Erfindung liegt nun die Aufgabe zugrunde, alternative Verschlusselemente für die Stirnseiten von rohrartigen Körpern zu entwickeln, die unter anderem nicht nur durch ein Anpressen eines O-Rings in einem rohrartigen Körper fixiert sind.

Die Aufgabe wird durch ein Verschlusselement gemäß Anspruch 1 und einer Schutzrohrleuchte gemäß Anspruch 6 gelöst. Vorteilhafte Weiterbildungen der Erfindung sind Gegenstand der abhängigen Ansprüche.

Erfindungsgemäß wird nun ein Verschlusselement für die Stirnseite eines rohrartigen Körpers, insbesondere einer Schutzrohrleuchte, vorgeschlagen, dass eine zum Verschließen des rohrartigen Körpers vorgesehene Endkappe, ein Klemmelement und ein Betätigungselement aufweist. Das Klemmelement ist hierbei dazu vorgesehen, mit der Innenwand des rohrartigen Körpers verklemmt zu werden und hierdurch die Endkappe an den rohrartigen Körper zu fixieren, wobei das Klemmelement durch eine Klemmscheibe gebildet ist, welche zumindest ein flügelartiges Klemmteil aufweist, das zum Verklemmen mit dem rohrartigen Körper vorgesehen ist. Das Betätigungselement wiederum dient zum Verklemmen der Klemmscheibe mit dem rohrartigen Körper, wobei das Betätigungselement von der der Klemmscheibe gegenüberliegenden Seite der Endkappe her betätigbar ist.

Die erfindungsgemäße Lösung ermöglicht somit ein in einfacher Weise anzubringendes Verschlusselement für die Stirnseiten von rohrartigen Körpern, derart, dass diese sicher und fest in dem rohrartigen Körper fixiert bzw. verklemmt sind und zusätzlich ohne Weiteres beliebig oft gelöst und wieder fixiert werden können.

Des Weiteren kann an der Endkappe auch ein Dichtelement angeordnet sein, wodurch die Stirnseiten eines rohrartigen Körpers mit Hilfe der Verschlusselemente dichtend abgeschlossen werden können.

Hierdurch ist es nun möglich, dass eine erfindungsgemäße Schutzrohrleuchte auch in Einsatzgebieten Anwendung findet, bei denen sie mit Gasen und auch Flüssigkeiten in Berührung kommt, die nicht ins Innere der Schutzrohrleuchte gelangen sollen bzw. dürfen.

Bei einer weiteren vorteilhaften Weiterbildung der Erfindung, ist das Betätigungselement als Schraube ausgebildet und mit der Klemmscheibe gekoppelt. Hierbei kann an der Endkappe ein Führungselement für die Schraube vorgesehen sein, dass einen Anschlag für die Klemmscheibe bildet, durch das ein Verklemmen der Klemmscheibe mit dem rohrartigen Körper bewirkt wird.

Nachfolgend soll die Erfindung anhand der beiliegenden Zeichnungen näher erläutert werden. Es zeigen:
- Figur 1: Teil einer erfindungsgemäßen Schutzrohrleuchte mit erfindungsgemäßem Verschlusselement

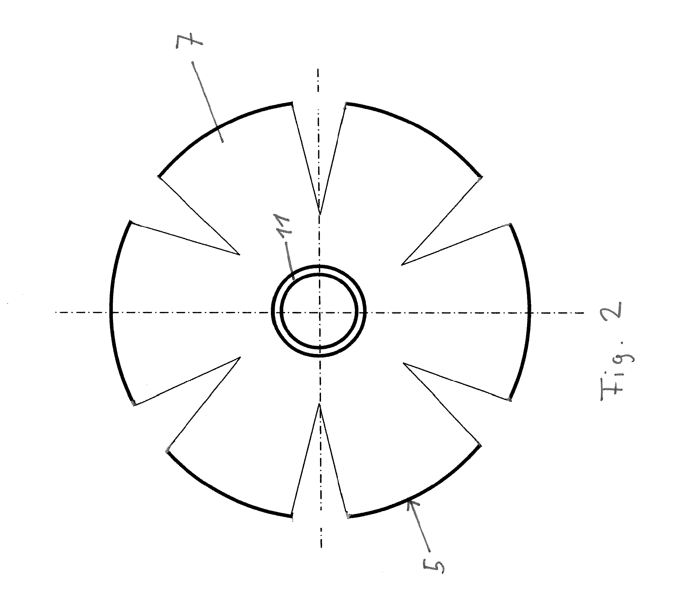

- Figur 2: Klemmscheibe mit flügelartigen Klemmteilen des erfindungsgemäßen Verschlusselements

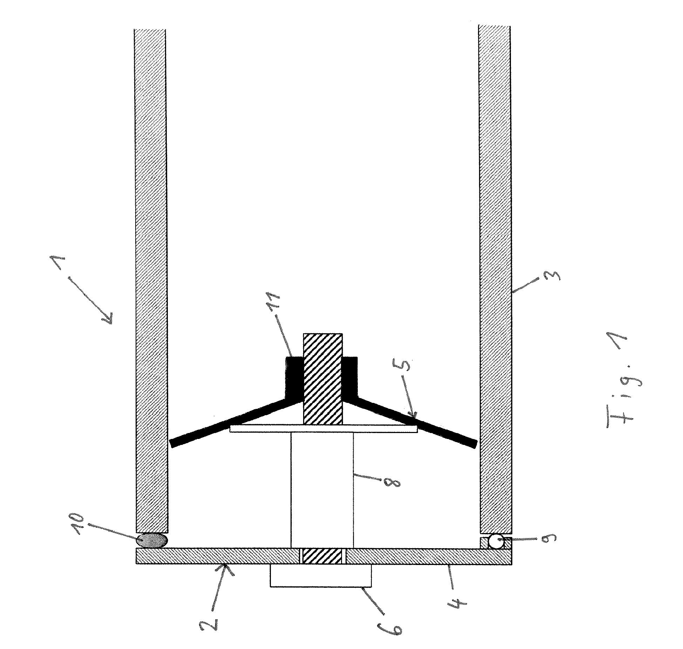

Figur 1 zeigt einen Teil einer erfindungsgemäßen Schutzrohrleuchte 1. Diese weist eine transparente Röhre bzw. einen rohrartigen Körper 3 auf, in dem die hier nicht gezeigten einzelnen Elemente der Schutzrohrleuchte 1, wie beispielsweise ein Vorschaltgerät, ein Starter und eine Leuchtstoffröhre, angeordnet sind. Die Stirnseite der Röhre 3 wird durch ein Verschlusselement 2 verschlossen. Das Verschlusselement 2 ist hierbei an der Innenwand der Röhre 3 verklemmt bzw. fixiert.

Das Verschlusselement 2 weist eine Endkappe 4, ein Klemmelement bzw. eine Klemmscheibe 5, ein Betätigungselement bzw. eine Schraube 6, ein Führungselement bzw. eine röhrenförmige Umfassung 8 und eine Dichtung 9, 10 auf.

Die Endkappe 4 ist hierbei zum Verschließen der stirnseitigen Öffnungen der Röhre 3 vorgesehen, wobei durch ein in der Endkappe 4 befindliches Loch die Schraube 6 derart ragt, dass sich der Kopf der Schraube 6 auf der der stirnseitigen Öffnung abgewandten Seite und der Schaft bzw. das Gewinde auf der entsprechend gegenüberliegenden Seite der Endkappe 4 befindet. Um nun die Endkappe 4 an der Röhre 3 zu verklemmen bzw. zu fixieren, ist im Bereich des Gewindes der Schraube 6 noch die Klemmscheibe 5 vorgesehen. Die Klemmscheibe 5 weist hierfür ein entsprechendes Innengewinde 11 auf. Somit wird die Schraube 6 von der der Klemmscheibe 5 gegenüberliegenden Seite der Endkappe 4 her betätigt. Des Weiteren ist die Schraube 6 noch von der rohrförmigen Umfassung 8 umgeben, an deren Ende eine Auflaufscheibe angeordnet ist, wobei die Umfassung 8 zwischen der Endkappe 4 und der Klemmscheibe 5 positioniert ist. Erfindungsgemäß weist die Klemmscheibe 5 flügelartige Klemmteile 7 auf, wobei diese Klemmteile 7 von dem Innengewinde 11 schräg nach außen ragend federnd ausgebildet sind. Hierdurch ergibt sich eine Klemmscheibe 5, die ähnlich einer gezahnten Tellerfeder vorgeformt ist. Der Durchmesser der Klemmscheibe 5 entspricht idealerweise dem Außendurchmesser der Röhre 3. Um die federnde Wirkung der Klemmscheibe 5 zu erzielen, ist beispielsweise die Verwendung eines Federstahls denkbar.

Bei entsprechender Betätigung der Schraube 6 wird nun die Klemmscheibe 5 in Richtung dem Stirnende der Röhre 3 gezogen. Hierdurch wird dann die an der rohrförmigen Umfassung 8 angeordnete Auflaufscheibe gegen die Klemmscheibe 5 gedrückt, wodurch die flügelartigen Klemmteile 7 der Klemmscheibe 5 nach außen gegen die Innenwandung der Röhre 3 gebogen werden. Durch die an die Innenwandung gebogenen Klemmteile 7, wird nun die Klemmscheibe 5 mit der Röhre 3 verspreizt bzw. verklemmt, wodurch ein Herausgleiten der Klemmscheibe 5 verhindert wird und somit das Verschlusselement 2 an der Stirnseite der Röhre 3 fixiert ist. Bei entsprechendem weiterem Betätigen der Schraube 6 wird nun die Endkappe 4 gegen die stirnseitige Öffnung der Röhre 3 gedrückt.

Entsprechend kann durch die Verwendung eines O-Rings 9 oder einer geschäumten Dichtung 10 zwischen der Endkappe 4 und der Wandung der Röhre 3 eine dichtende Verbindung hergestellt werden, wodurch die stirnseitige Öffnung der Röhre 3 durch die Endkappe 4 abgedichtet wird. Hierbei ist es außerdem nun ohne Weiteres möglich, durch entsprechendes Betätigen der Schraube 6 die Verspreizung zwischen der Klemmscheibe 5 und der Innenwand der Röhre 3 aufzuheben und somit ein Lösen der Endkappe 4 von der stirnseitigen Öffnung der Röhre 3 zu ermöglichen. Durch den Aufbau des Verschlusselements ist es des Weiteren dann auch möglich, dieses beliebig oft zu verwenden.

Die erfindungsgemäße Lösung ermöglicht somit in einfacher Weise einen dichtenden Verschluss der Röhre.

Die Querschnittsform der Röhre 3 ist hierbei nicht auf einen runden Querschnitt beschränkt. Prinzipiell ist jede Querschnittsform denkbar, wobei dann die Endkappe 4 und die Klemmscheibe 5 und möglicherweise auch die Auflaufscheibe entsprechend angepasst werden müssten. So wäre beispielsweise auch ein quadratischer oder rechteckiger Querschnitt der Röhre denkbar.

Des Weiteren kann das Verschlusselement, falls lediglich ein Abschluss der Röhre gewünscht ist, auch ohne Dichtung 9, 10 verwendet werden. Auch stellt die röhrenförmige Umfassung 8 mit der Auflaufscheibe hier lediglich ein mögliches Beispiel für das Verklemmen des Klemmelements mit dem rohrartigen Körper durch das Betätigungselement dar.

## Patentansprüche

1. Verschlusselement (2) für die Stirnseite eines rohrartigen Körpers (3), insbesondere einer Schutzrohrleuchte (1), aufweisend
eine zum Verschließen des rohrartigen Körpers (3) vorgesehene Endkappe (4),
ein Klemmelement, welches dazu vorgesehen ist, mit der Innenwand des rohrartigen Körpers (3) verklemmt zu werden und hierdurch die Endkappe (4) an dem rohrartigen Körper (3) zu fixieren und
ein Betätigungselement (6) zum Verklemmen des Klemmelements mit dem rohrartigen Körper (3), wobei das Betätigungselement (6) von der dem Klemmelement gegenüberliegenden Seite der Endkappe (4) her betätigbar ist,
**dadurch gekennzeichnet,**
**dass** das Klemmelement durch eine Klemmscheibe (5) gebildet ist, welche zumindest ein flügelartiges Klemmteil (7) aufweist, das zum Verklemmen mit dem rohrartigen Körper (3) vorgesehen ist.

2. Verschlusselement nach Anspruch 1,
**dadurch gekennzeichnet,**
**dass** das Betätigungselement eine Schraube (6) ist, welche mit der Klemmscheibe (5) gekoppelt ist.

3. Verschlusselement nach Anspruch 2,
**dadurch gekennzeichnet,**
**dass** an der Endkappe (4) ein Führungselement (8) für die Schraube (6) angeordnet ist.

4. Verschlusselement nach Anspruch 3,
**dadurch gekennzeichnet,**
**dass** das Führungselement (8) einen Anschlag für die Klemmscheibe (5) bildet, durch das ein Verklemmen der Klemmscheibe (5) mit dem rohrartigen Körper (3) bewirkt wird.

5. Verschlusselement nach einem der vorherigen Ansprüche,
**dadurch gekennzeichnet,**
**dass** an der Endkappe (4) ein Dichtelement (9, 10) angeordnet ist.

6. Schutzrohrleuchte (1) mit einem zumindest teilweise transparenten rohrartigen Gehäuse (3), in dem Mittel zur Halterung und zum Betreiben mindestens einer Lichtquelle angeordnet sind,
wobei zumindest ein Ende des Gehäuses durch ein Verschlusselement (2) gemäß einem der vorherigen Ansprüche verschlossen ist.
